# EUROPEAN PATENT SPECIFICATION

(11) **EP 0 823 175 B1**
(45) Date of publication and mention of the grant of the patent: **19.01.2005**
(21) Application number: 96924232.0
(22) Date of filing: 12.07.1996
(51) Int. Cl.: H04M 3/42, H04M 11/00

(54) **PUBLIC SERVER FOR COMPUTER-CONTROLLED TELEPHONY**
SERVER FÜR EIN COMPUTERGESTEUERTES FERNSPRECHSYSTEM
SERVEUR PUBLIC POUR TELEPHONIE COMMANDEE PAR ORDINATEUR

(30) Priority: 04.08.1995 SE 9502777
(43) Date of publication of application: 11.02.1998
(73) Proprietor: TELIA AB, 123 86 Farsta (SE)
(72) Inventor: ANDREASSON, Mikael, S-977 54 Luleaa (SE); BODIN, Ulf, S-973 31 Luleaa (SE); BÄCKMAN, Mikael, S-954 32 Luleaa (SE)
(74) Representative: Akerman, Marten Lennart
(86) International application number: PCT/SE1996/000947
(87) International publication number: WO 1997/006625

(56) References cited:
- EP-A- 0 384 339
- EP-A- 0 479 660
- WO-A-95/17060
- GB-A- 2 254 981

## Description

### TECHNICAL FIELD

The present invention relates to an arrangement for computer-controlled telephony, i.e. use of an intelligent terminal or computer to control telephone services in a public telecommunication network. The invention also relates to a public server which includes an application program interface to make an effective and new arrangement for computer-controlled telephony possible.

### PRIOR ART

Integration of computers and telephones is today a field of current interest, and activities are going on at a number of important operators in the computer market. Several software suppliers of personal computers have developed application program interfaces for development of computer-controlled telephone services. Manufacturers of PABXs (Private Automatic Branch Exchanges) offer interfaces towards their exchanges for these application program interfaces, which make possible development of advanced telephone applications in PABX environment. An integrated system with connected PABX offers complete computer telephone funtionality, but more simple applications can also be developed outside the PABX environment. These applications then will have a restricted computer telephone functionality.

In a near future personal computers will probably be a common type of intelligent telephone terminals. Such a telephone terminal will call for new demands on the public telecommunication networks, which the telecommunication networks of today cannot fulfil. Services in intelligent networks will not be possible to be utilized to the full, because there is lacking a general interface to handle services with computer control in an effective way. Within this field a number of patent documents are known.

EP-A-0 629 091 shows a telecommunication system which supports a number of different user applications. According to the document, calls from a subscriber are connected to one and the same point, independent of which application that is concerned. After that a connection is established to a suitable server which can handle the application in question. By the described method a computer consequently can be connected to a suitable server.

EP-A-0 518 195 describes a system and a method which offers a platform independent application program interface. This means that the interface is independent of which communication protocol that is used at exchange of information between application programs.

EP-A-0 527 590 relates to connection of computers via ISDN for distributed handling of applications by means of an application program interface.

GB 2 254 981 discloses providing a computer supported telephony application CSTA system for controlling a PABX, without substantially modifying the PABX.

EP 0 479 660 shows a distributed configuration profile for a computing system, which allows a selection of service provider's resources by clients while maintaining availability and load sharing.

The present invention implies an improvement by a server being provided in the public network which can provide an application interface which makes possible utilization of the telecommunication services.

### SUMMARY OF THE INVENTION

Consequently the present invention provides a public server PTS for computer controlled telephony according to claim 1.

The different aspects of the invention are defined in details in the enclosed patent claims.

### BRIEF DESCRIPTION OF THE DRAWINGS

The invention will now be described in details with references to enclosed drawings, where
Figur 1 is a block diagram over the construction of an arrangement for computer-controlled telephony according to the present invention.
Figure 2 is a block diagram over the construction of the public server according to the present invention, and
Figure 3 is an example of implementation of the invention with the intelligent networks, IN, of today.

### DETAILED DESCRIPTION OF THE PREFERRED EMBODIMENTS OF THE INVENTION

As has previously been mentioned, integration of computers and telephones (Computer Telephone Integration, CTI) is a topic of current interest. Previously CTI-systems were implemented especially in PABX environment. According to the present invention the CTI-implementation is moved out from the PABX to the public telecommunication network owing to a new public telephone server (PTS).

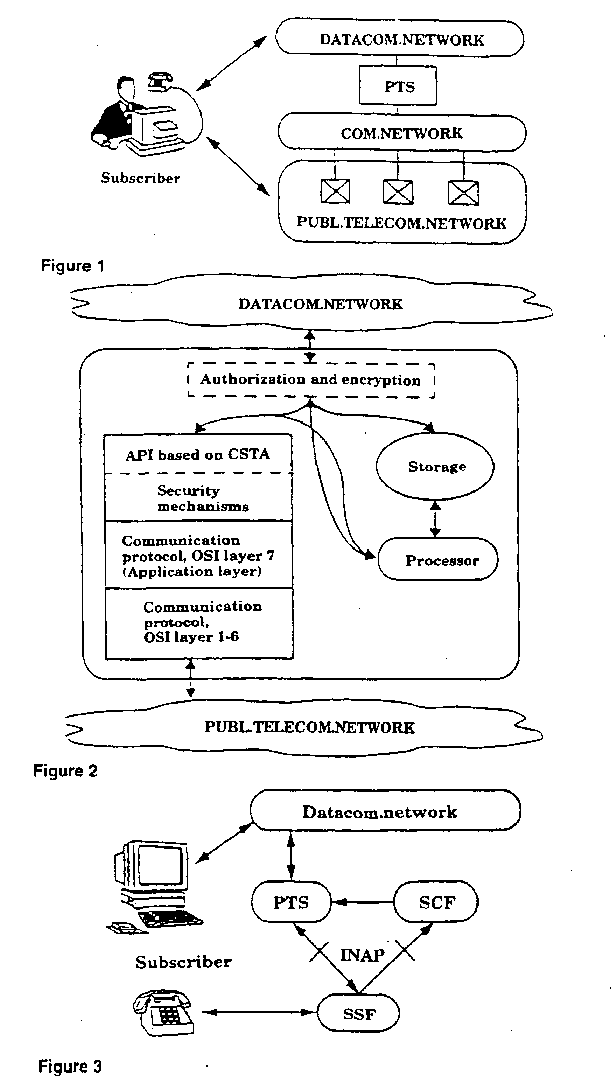

With the PTS-concept according to the present invention we intend to offer a flexible platform for future telephone services adapted to intelligent telephone terminals of type personal computer with CTI-software. This platform principally consists of an application program interface API, which can be based on ECMA's CTI-recommendation CSTA. The subscribers have access to the application program interface via a separate data channel (data network), see Figure 1. The PTS concept consequently is aimed at subscribers with intelligent telephone terminals generally, and these intelligent telephone terminals can with advantage be of type personal computer.

The PTS-concept can be implemented with the IN-concept as base and then implies that the access to the IN-based services is made via a data channel instead of via tone signalling. IN-based services consequently will be offered as a standardized application program interface API, instead of completed services. By that a more flexible platform, a server PTS, which makes possible development of individually related services directly adapted to each separate subscriber's needs and wishes, is achieved. These services shall be possible to select to execute either in the subscriber's intelligent terminal, or in the server PTS.

Execution of services can be made either in the subscriber's intelligent terminal, or directly in the server PTS. Services which are executed in the subscriber's terminal utilize the functionality in the application program interface of the server to obtain information from the telecommunication network, and to perform the operations which are wanted in the telecommunication network. The information is handled in the terminal, and the operations are initiated from the terminal.

Services can also be executed directly in the server PTS as an application program which also utilizes the application program interface API of the server. This program can be loaded down from the personal computer in order to make it possible for the subscriber to have access to PTS-based services and telephony, even if his/her intelligent terminal does no have active contact with the server PTS. This is necessary since PTS-based telephony implies that all incoming and outgoing calls are answered respective initiated via the application program interface API of the server.

The PTS-concept requires that the subscriber has access to outband signalling, or a quite separate data channel beside its telephone connection. This data channel is used for the communication which is required between the subscriber's intelligent terminal and the application program interface API of the server to execute the application programs which the subscriber runs in his/her terminal or in the server PTS.

ECMA's (European Computer Manufacturers Association) CTI-recommendation CSTA (Computer Supported Telecommunications Application) defines the services which will constitute the base for the application program interface API of the server. These services are intended to be combined in an application program which performs the wanted, individually related service. The subscriber has direct access to this application program interface API and can by that construct own unique individually related telephone services.

The server PTS consequently shall consist of three main parts which together constitute a server PTS. In certain cases it can be of current interest to introduce security aspects at access to the server PTS. An overall view of the architecture of the server PTS is shown in Figure 2.

There shall be an application program interface that shall offer possibilities to perform connections and to ask for information from the telecommunication network. This application program interface can be based on ECMA's CTI-recommendation CSTA. The application program interface of the server shall constitute an interface towards the telecommunication network and conceal which type of network the server is connected to. This application program interface can utilize a communication protocol based on OSI protocol stack. The application program interface of the server will then be implemented on OSI layer 7 (Application layer). OSI layer 1-6 can be used for communication with the exchanges in the connected public telecommunication network. Necessary security shall be built in in this application program interface to protect the underlying network from not allowed operations.

There shall be space for subscribers to store own data in the server. This storage shall be at the users disposal to store application programs and other information which is related to these programs.

The server shall provide processor capacity for the subscribers to execute own application programs stored in the server. These programs utilize the application program interface of the server to perform the intended individually related services which the subscriber wants.

The subscribers shall have possibility to reach the server from a data channel which can be an open data-communication network such as for instance Internet. If the connected data-communication network is open (not private) a logging in procedure shall be performed where the identity of the subscriber is checked. In this case signalling and data exchange which is performed betweeen the subscriber's intelligent terminal and the server shall be encrypted to guarantee the security at the transmission.
The server shall include both service related data and logic, as well as subscriber related data and logic. Service related data and logic is not dependent of any specific subscriber, but all subscribers will have access to the same data and logic.

Subscriber related data and logic is unique for each subscriber and each subscriber has only access to his/her own data and logic.

The application program interface of the server is intended to be a uniform interface to the functionality of which all subscribers have access. Application programs can by that be bought, be exchanged or be constructed by the subscriber which in this way can acquire his/her wanted service profile. The application program interface consequently will be the same for all subscribers and be realized by service related data and logic.

Security shall be built into the application program interface in order to prevent not allowed operations to be performed. Security which prevents that not allowed requests for information is made shall also be built into the application program interface. In addition there shall be a control mechanism in the application program interface which prevents that operations are performed in not allowed order, which can damage the underlying telecommunication network. These three aspects of security are the same for all subscribers and are realized by service-related data and logic.

Security shall be built into the application program interface to prevent that subscribers make connections or ask for information of not permitted type outside his/her own defined domain. A subscriber's domain is the connections and telephone numbers which are the subscribers own. A subscriber shall consequently be able to perform connections and ask for information without restrictions only within his/her own domain. This security is unique for each subscriber and is realized by subscriber-related data and logic.

The subscribers shall have possibility to load down application programs in the server to create own individually related services when the own intelligent terminal does not have contact with the server.

To run an application program in the server, the subscriber shall have access to a space of his/her own in the server where an application program of his/her own can be loaded down and also be executed. This space is realized by subscriber-related data and logic. The processor capacity which is required to execute the programs is realized by service related data and logic.

The access to the server can be anticipated by a logging in procedure where the subscriber's identity is checked. The signalling and data exchange which is made between the subscriber's intelligent terminal and the server can be encrypted to guarantee the security at the transmission. This security is unique for each subscriber and is realized by subscriber-related data and logic.

With reference to Figure 1 is described how the invention can be implemented with the IN-concept as base.

In this implementation model, the server communicates directly with current SSF over IN's communication network with the communication protocol INAP (Intelligent Network Application Protocol). The telecommunication network will recognize the server as a type of SCF, since the telecommunication network only sees the server's INAP-protocol and has no knowledge of the other parts of the server. At incoming call to a subscriber which uses the invention, the SSF is detected that the telephone number is related to an IN-service. By that the information is asked for by an SCF which recognizes the number as a PTS-number. The control is handed over to the server to which the subscriber is connected. This delivery can be made via INAP. Please notice that the subscriber only has knowledge of and access to one server. The subscriber can after that handle the call via the application program interface of the server with his/her intelligent terminal. Alternatively the SSF can directly associate the call with right PTS which is preferred.

The model makes possible an effective realization of the invention and reuses the communication protocol INAP. By that the invention further develops the IN of today, and gives possibilities to develop individually related services.

The invention is only restricted by the following patent claims.

## Claims

1. A public server (PTS) for computer-controlled telephony which belongs to, or is adapted to communicate with, a public telecommunication network in an arrangement with a data terminal at a subscriber's, which data terminal is intended to handle telecommunication services in a public telecommunication network,
**characterized in that** the server (PTS) comprises an application program interface (API) which is adapted to support communication between the data terminal and the telecommunication network and a storage for data and programs, wherein a part of the storage can be arranged individually for a subscriber for storing of his/her data and application programs, and that the server (PTS)has processor capacity for execution of the subscriber's programs.

2. A public server according to claim 1,
**characterized in that** the application program interface (API) is based on the Computer Supported Telecommunication Application CSTA.

3. A public server according to claim 1 or 2,
**characterized in that** the server (PTS) comprises security mechanisms which are adapted to prevent that not allowed information is requested by the telecommunication network, and to prevent not permitted operations and not permitted sequences of operations.

4. A public server according to claim 1, 2 or 3,
**characterized in that** the server (PTS) is adapted to communicate with an intelligent network (IN) by means of the Intelligent Network Application Protocol INAP.

5. An arrangement for computer-controlled telephony, including a data terminal at a subscriber, which data terminal is intended to handle telecommunication services in a public telecommunication network, and a public server (PTS) according to any one of claims 1 to 4.

6. Arrangement according to claim 5,
**characterized in that** the data terminal is connected to the server (PTS) via a separate data channel or via out-band signalling.

7. Arrangement according to claim 5,
**characterized in that** the data terminal is connected to the server (PTS) via an open data communication network.

8. Arrangement according to claim 7,
**characterized in that** the access to the server (PTS) is adapted to be controlled by a logging in procedure.

## Patentansprüche

1. Server (PTS) für den computergesteuerten Fernsprechdienst, der zu einem öffentlichen Fernsprechnetz gehört oder so ausgebildet ist, dass er mit diesem kommunizieren kann, in einer Anordnung mit einem Datenterminal auf der Seite des Teilnehmers, der dazu dient, die Fernmeldedienste in einem öffentlichen Fernmeldenetz zu handhaben, **dadurch gekennzeichnet, dass** der Server (PTS) eine Anwendungsprogrammschnittstelle (API) aufweist, die so ausgebildet ist, dass sie die Kommunikation zwischen dem Datenterminal und dem Fernmeldenetz und einem Speicher für Daten und Programme unterstützen kann, wobei ein Teil des Speichers zum Speichern seiner/ihrer Datenund Anwendungsprogramme individuell für den Teilnehmer angeordnet sein kann, und dass der Server (PTS) eine Prozessorkapazität für die Durchführung der Programme des Teilnehmers hat.

2. Server nach Anspruch 1, **dadurch gekennzeichnet, dass** die Anwendungsprogrammschnittstelle (API) auf der computergestützten Fernmeldeanwendung (CSTA) basiert.

3. Server nach Anspruch 1 oder 2, **dadurch gekennzeichnet, dass** der Server (PTS) Sicherheitsmechanismen aufweist, die so ausgebildet sind, dass sie verhindern, dass unzulässige Information von dem Fernmeldenetz angefordert wird, und dass sie nicht zulässige Operationen und nicht zulässige Sequenzen von Operationen verhindern.

4. Server nach Anspruch 1, 2 oder 3, **dadurch gekennzeichnet, dass** der Server (PTS) so ausgebildet ist, dass er mittels des intelligenten Netzwerkanwendungsprotokolls (INAP) mit einem intelligenten Netzwerk (IN) kommunizieren kann.

5. Anordnung für einen computergesteuerten Fernsprechdienst mit einem Datenterminal auf der Seite des Teilnehmers, wobei dieser Datenterminal dazu dient, die Fernmeldedienste in einem öffentlichen Fernmeldenetz zu handhaben, und mit einem Server (PTS) gemäß einem der Ansprüche 1 bis 4.

6. Anordnung nach Anspruch 5, **dadurch gekennzeichnet, dass** der Datenterminal über einen separaten Datenkanal oder über eine Signalisierung außerhalb des Bandes mit dem Server (PTS) verbunden ist.

7. Anordnung nach Anspruch 5, **dadurch gekennzeichnet, dass** der Datenterminal über ein offenes Datenkommunikationsnetz mit dem Server (PTS) verbunden ist.

8. Anordnung nach Anspruch 7, **dadurch gekennzeichnet, dass** der Zugriff auf den Server so ausgebildet ist, dass er durch einen Einlogvorgang gesteuert wird.

## Revendications

1. Serveur public (PTS) pour téléphonie commandée par ordinateur, qui appartient à, ou peut communiquer avec, un réseau de télécommunication public dans une configuration comportant un terminal de données chez un abonné, ce terminal de données étant prévu pour traiter des services de télécommunication dans un réseau de télécommunication public,
**caractérisé en ce que**
le serveur (PTS) comprend une interface de programme d'application (API) qui est prévue pour prendre en charge la communication entre le terminal de données et le réseau de télécommunication et une mémoire de données et de programmes, une partie de la mémoire pouvant être agencée individuellement pour qu'un abonné y stocke ses données et programmes d'application, et
le serveur (PTS) possède une capacité de processeur pour l'exécution des programmes de l'abonné.

2. Serveur public selon la revendication 1, **caractérisé en ce que** l'interface de programme d'application (API) est basée sur l'Application de Télécommunication Supportée par Ordinateur CSTA.

3. Serveur public selon la revendication 1 ou 2, **caractérisé en ce que** le serveur (PTS) comprend des mécanismes de sécurité qui sont prévus pour empêcher qu'une information non admise soit demandée par le réseau de télécommunication, et pour empêcher des opérations non autorisées et des séquences d'opérations non autorisées.

4. Serveur public selon la revendication 1, 2 ou 3, **caractérisé en ce que** le serveur (PTS) est prévu pour communiquer avec un réseau intelligent (IN) au moyen du Protocole d'Application de Réseau Intelligent INAP.

5. Agencement pour téléphonie commandée par ordinateur, comprenant un terminal de données chez un abonné, ce terminal de données étant prévu pour traiter des services de télécommunication dans un réseau de télécommunication public, et un serveur public (PTS) selon une quelconque des revendications 1 à 4.

6. Agencement selon la revendication 5, **caractérisé en ce que** le terminal de données est connecté au serveur ("PTS) via un canal de données séparé ou via une signalisation hors bande.

7. Agencement selon la revendication 5, **caractérisé en ce que** le terminal de données est connectée au serveur (PTS) via un réseau de communication de données ouvert.

8. Agencement selon la revendication 7, **caractérisé en ce que** l'accès au serveur (PTS) est prévu pour être commandé par une procédure d'ouverture de session.
